# EUROPEAN PATENT APPLICATION

(11) **EP 2 933 737 A1**
(43) Date of publication of application: **21.10.2015**
(21) Application number: 14199143.0
(22) Date of filing: 19.12.2014
(51) Int. Cl.: G06F 17/30

(54) **Search recommendation method and device**

(30) Priority: 14.04.2014 CN 201410148916
(71) Applicant: Baidu Online Network Technology (Beijing) Co., Ltd, Beijing 100085 (CN)
(72) Inventor: Wang, Haifeng, 100085 Beijing (CN); Huang, Jizhou, 100085 Beijing (CN); Li, Ying, 100085 Beijing (CN); Wu, Hua, 100085 Beijing (CN)
(74) Representative: advotec.

(57) **Abstract**

A search recommendation method and a search recommendation device are provided. The method includes: receiving a first search query; obtaining a search result according to the first search query; analyzing the search result to obtain at least one focus corresponding to the search result, and generating recommendations corresponding respectively to the at least one focus; providing a search result page to display the search result, the at least one focus and the recommendations corresponding respectively to the at least one focus in the search result page.

## Description

### FIELD

The present disclosure relates to a field of searching technology, and more particularly relates to a search recommendation method and device.

### BACKGROUND

At present, users obtain internet information by using a search engine. Specifically, firstly a user inputs a search query. Then a search engine matches search results including the search query in web pages or web services according to the search query, and provides the search results to the user after sequencing the search results. Thus, the user can obtain the internet information through the search results provided by the search engine.

With the above searching mechanism based on a search query matching, the user has different potential search requirements with respect to different search results after browsing the search results, that is, the user may take further operations for searching with respect to different search results. At present, if a further search is performed by the user, the search query needs to be constructed to obtain search results again, thus increasing the search cost of the user, decreasing the user satisfaction and leading a bad user experience.

### SUMMARY

The present disclosure is aimed to solve the above problems to some extent.

Thus, a first objective of the present disclosure is to provide a search recommendation method. With the method, the search cost of a user is decreased when multi-azimuth information is provided for the user, such that the user can obtain search results more rapidly, thus improving the user experience.

A second objective of the present disclosure is to provide a search recommendation device.

In order to achieve the above objectives, embodiments of a first aspect of the present disclosure provide a search recommendation method. The method comprises: receiving a first search query; obtaining a search result according to the first search query; analyzing the search result to obtain at least one focus corresponding to the search result, and generating recommendations corresponding respectively to the at least one focus; providing a search result page to display the search result, the at least one focus and the recommendations corresponding respectively to the at least one focus in the search result page.

With the search recommendation method according to embodiments of the present disclosure, a corresponding focus (such as a focus on different scenes and a focus on different types of search results) may be obtained by analyzing search results, and corresponding recommendations may be generated according to the focus and be recommended to the user so as to accord with following operations for searching the user may take, such that the user may obtain needed search results by clicking the recommendations directly without inputting a search query again. In this way, the search cost of the user is decreased when multi-azimuth information is provided to the user, such that the user may obtain the search results more rapidly, thus improving the user experience.

Embodiments of a second aspect of the present disclosure provide a search recommendation device. The device comprises: a first receiving module configured for receiving a first search query; a first obtaining module configured for obtaining a search result according to the first search query; a second obtaining module configured for analyzing the search result to obtain at least one focus corresponding to the search result and for generating recommendations corresponding respectively to the at least one focus; a providing module configured for providing a search result page to display the search result, the at least one focus and the recommendations corresponding respectively to the at least one focus in the search result page.

With the search recommendation device according to embodiments of the present disclosure, a corresponding focus (such as a focus on different scenes and a focus on different types of search results) may be obtained by analyzing search results, and corresponding recommendations may be generated according to the focus and be recommended to a user so as to accord with following operations for searching that the user may take later, such that the user may obtain needed search results by clicking the recommendations directly without inputting a search query again. In this way, the search cost of the user is reduced when multi-azimuth information is provided to the user, such that the user may obtain the search results more rapidly, thus improving the user experience.

Embodiments of a third aspect of the present disclosure provide a non-transitory computer-readable storage medium, including one or more programs for executing a search recommendation method provided by embodiments of the present disclosure.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of a search recommendation method according to an embodiment of the present disclosure;
Figs. 2(a) to 2(h) are schematic diagrams of search result pages according to embodiments of the present disclosure;
Fig. 3 is a flow chart of a search recommendation method according to another embodiment of the present disclosure;
Fig. 4 is a block diagram of a search recommendation device according to an embodiment of the present disclosure;
Fig. 5 is a block diagram of a search recommendation device according to an embodiment of the present disclosure;
Fig. 6 is a block diagram of a search recommendation device according to another embodiment of the present disclosure; and
Fig. 7 is a block diagram of a search recommendation device according to another embodiment of the present disclosure.

### DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the description of the present disclosure, it is to be understood that terms such as "a plurality of" means two or more than two, terms such as "first" and "second" are used herein for purposes of description and are not intended to indicate or imply relative importance or significance or to imply the number of indicated technical features.

A search recommendation method and device according to embodiments of the present disclosure will be described with reference to drawings.

In order to reduce the search cost of a user and improve the user satisfaction, the present disclosure provides a search recommendation method. The method includes: receiving a first search query; obtaining a search result according to the first search query; analyzing the search result to obtain at least one focus corresponding to the search result, and generating recommendations corresponding respectively to the at least one focus; providing a search result page to display the search result, the at least one focus and the recommendations corresponding respectively to the at least one focus in the search result page.

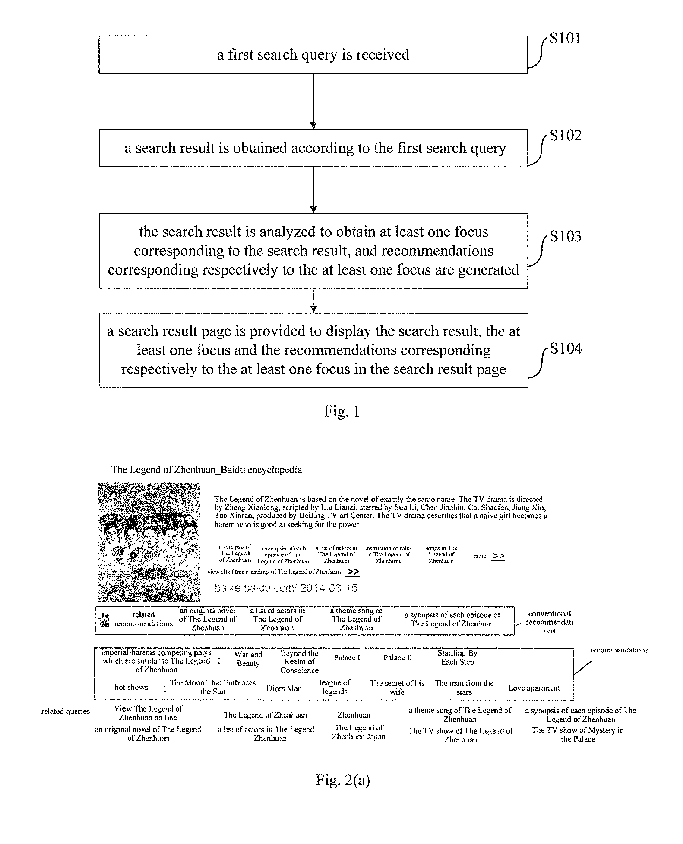

Fig. 1 is a flow chart of a search recommendation method according to an embodiment of the present disclosure.

As shown in Fig. 1, the search recommendation method according to the embodiment of the present disclosure includes the following steps.

In step S101, a first search query is received.

Specifically, in some embodiments, the search query may be input by a user through an input box provided by a search engine, or through various input boxes for quick searching, which is not limited in the embodiments of the method.

In step S102, a search result is obtained according to the first search query.

Specifically, the method for determining a search result according to a search query may refer to related techniques. The specific method for determining a search result according to a search query is not limited in the embodiments of the present disclosure.

In step S103, the search result is analyzed to obtain at least one focus corresponding to the search result, and recommendations corresponding respectively to the at least one focus are generated.

In one embodiment of the present disclosure, the focus corresponding to the search result is a content that the user wants to know in the search result, i.e. a potential following operation for searching (such as a requirement depending on different scenes, a potential requirement, hypogynous in-depth knowledge or detailed knowledge) which may be obtained according to a query frequency and/or a user search record. The recommendations are entities, services and resources corresponding to the focus.

For example, with respect to a search query "weather of Beijing", a weather forecast of Beijing may be obtained. If it's hazy today, entities and suggestions such as "3M mask", "air cleaner", "notes" or "What is good to eat" may be recommended to the user according to the focus of the user in a hazy weather, such that recommendations may be recommended to the user according to various scenes, thus satisfying the user's potential intention of searching.

In step S104, a search result page is provided to display the search result, the at least one focus and the recommendations corresponding respectively to the at least one focus in the search result page.

In some embodiments of the present disclosure, the at least one focus and the recommendations corresponding respectively to the at least one focus may be displayed below the search result. In other embodiments of the present disclosure, the at least one focus and the recommendations corresponding respectively to the at least one focus may be displayed at other positions, which is not limited in the embodiments of the present disclosure.

Figs. 2(a) to 2(h) are schematic diagrams of search result pages according to embodiments of the present disclosure.

For example, as shown in Fig. 2a, with respect to a search query "The Legend of Zhenhuan", apart from contents provided to the user such as "an original novel of The Legend of Zhenhuan", "a list of actors in The Legend of Zhenhuan", "a theme song of The Legend of Zhenhuan", and "a synopsis of each episode of The Legend of Zhenhuan", the user may search TV shows whose types are as same as that of The Legend of Zhenhuan (whose contents are similar to that of The Legend of Zhenhuan or which are as hot as The Legend of Zhenhuan), so recommendations such as "imperial-harems competing plays which are similar to The Legend of Zhenhuan" and "hot shows" may be recommended to the user.

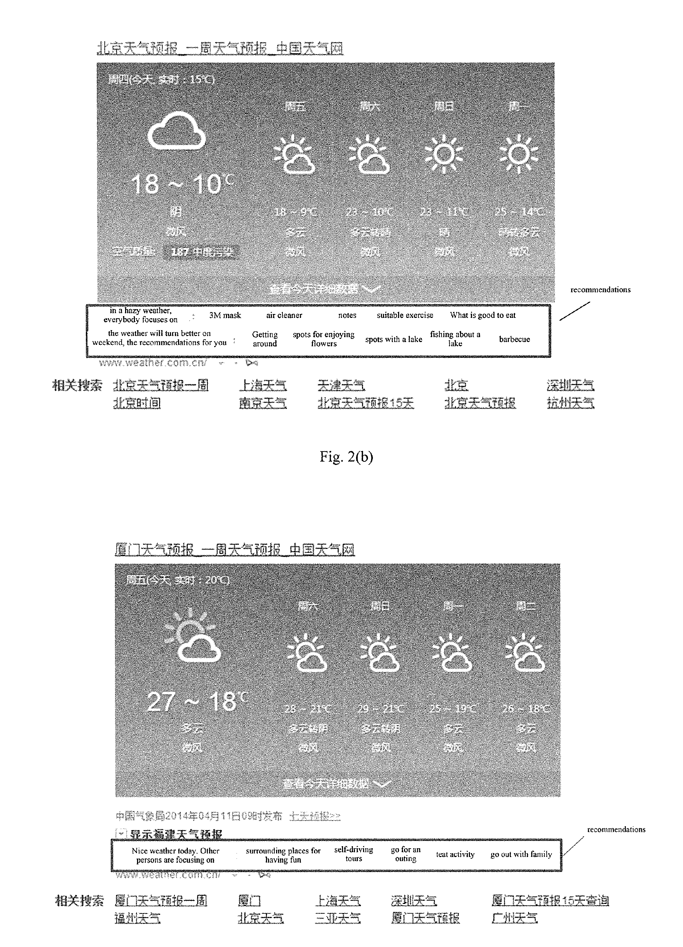

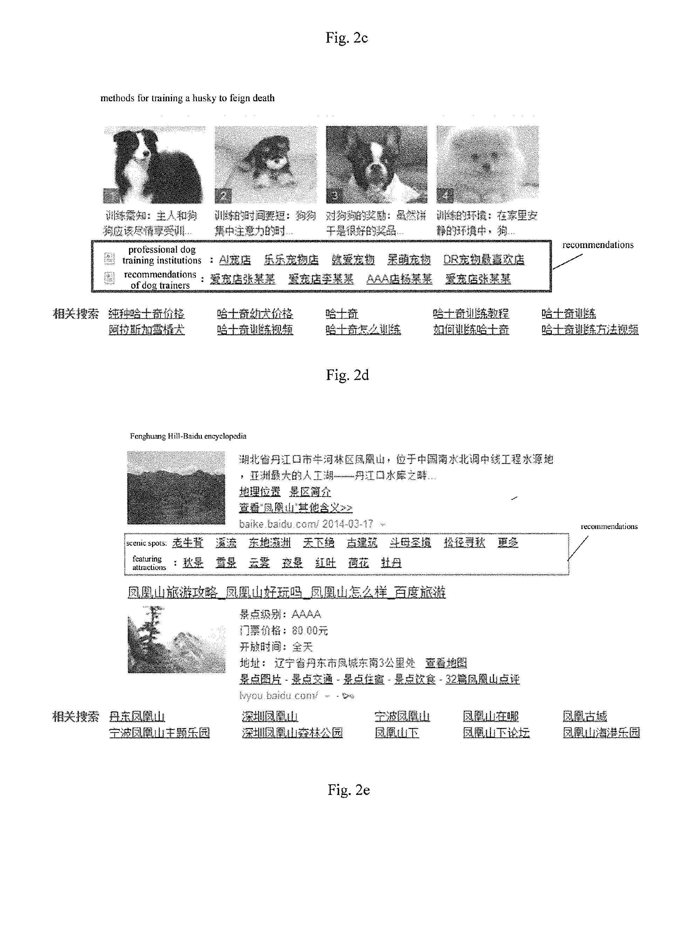

Since the focus of the user in a hazy weather is different from that in a good weather, some contents and resources everyone is concerned with in the hazy weather may be recommended to the user in the hazy weather; moreover, recommendations such as "Getting around", "spots for enjoying flowers" and "spots with a lake" may be recommended to the user according to a case that the weather may turn better on weekend; on the contrary, recommendations such as "surrounding places for having fun" and "self-driving tours" may be recommended to the user since most of users are concerned with playing in a good weather, as shown in Figs 2b and 2c.

As shown in Fig. 2d, with respect to a search query "methods for training a husky to feign death", related training methods for feigning death may be displayed in the search result page directly. After obtaining the training methods for feigning death, the user may have potential succeeding requirements or related demands. If the user learns that it is difficult to train the husky to feign death after viewing the methods, the user may hope to find a professional pet training institution to help himself/herself to train the husky, or even may hope to find some famous dog trainers to train the husky, such that recommendations such as "training institutions" and "trainers" may be recommended to the user.

In one embodiment of the present disclosure, with respect to a plurality of search results, the step of analyzing the search result to obtain at least one focus corresponding to the search result includes following steps. Firstly, the plurality of search results are filtered to obtain a filtered search result that is authoritative and may stimulate the user's potential operations for searching most likely. Then, the filtered search result is analyzed to obtain the at least one focus. Specifically, it is determined which search result may stimulate the user's potential operations for searching and is authoritative according to the search record of the user and the authority of the search results, or according to other standards, which is not limited in the embodiments of the present disclosure. For example, as shown in Fig. 2e, with respect to a search query "Fenghuang Hill", a plurality of search results such as an encyclopedia and a tourist guide may be obtained. The encyclopedia may be used as a recommendation basis after the plurality of search results are filtered. Specifically, hypogynous in-depth recommendations of Fenghuang Hill such as "scenic spots" and "featuring attractions" may be recommended to the user.

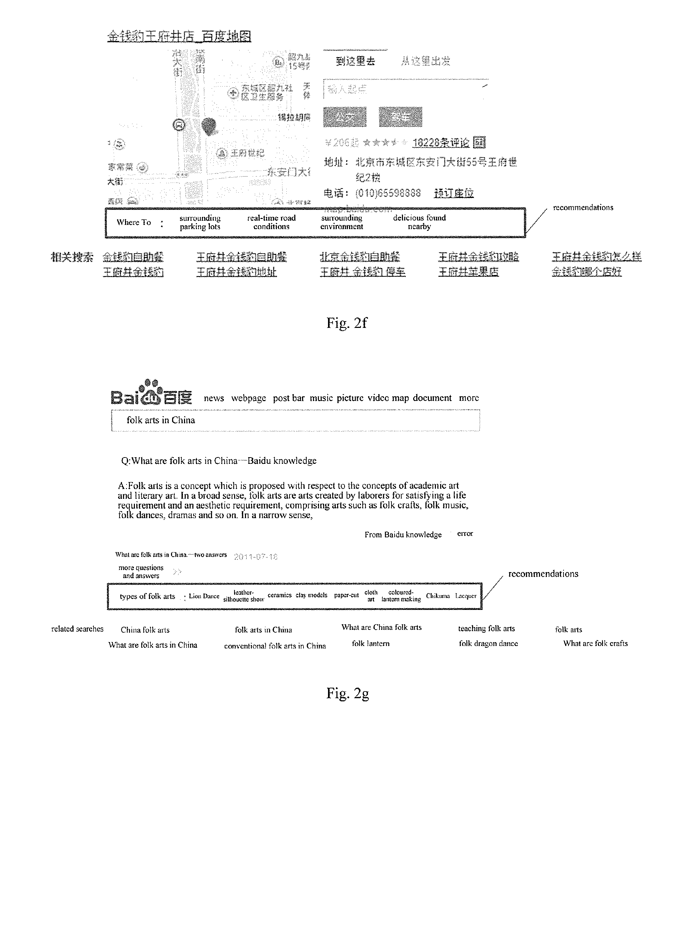

In some embodiments of the present disclosure, with respect to various types of search results (such as encyclopedia results, question-answer results, and a map results), the recommendations according with the user's requirement may be recommended. Specifically, as shown Figs. 2f and 2g, if the search results are map results or include geographic information, Where To services such as "surrounding parking lots", "real-time road conditions", "surrounding environment", and "delicious found nearby" may be recommended to the user. If the search results are question-answer results, the answers to the questions may be used as recommendations directly. Specifically, as shown in Fig. 2g, various folk arts may be used as recommendations directly.

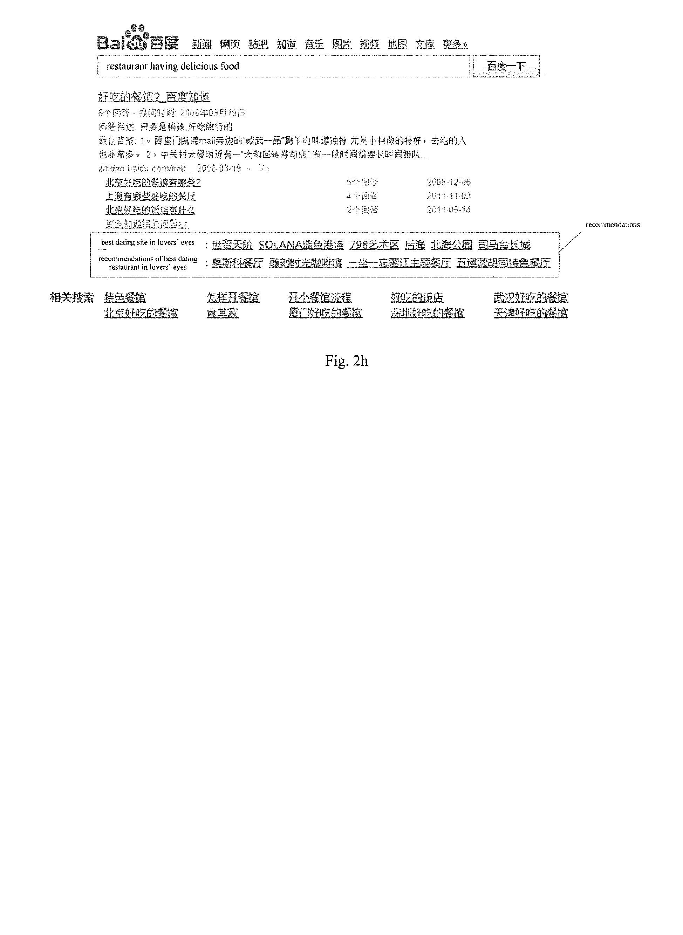

In one embodiment of the presented disclosure, personal recommendations may be provided to the user according to a historical search query of the user. Specifically, in the step of analyzing the search result to obtain at least one focus corresponding to the search result, firstly the historical search query is obtained and then the at least one focus is obtained according to the historical search query, the first search query and the search result. For example, as shown in Fig. 2h, if a user searches with a search query "what present is suitable for the girlfriend" before inputting a search query "restaurant having delicious food", it may be determined that the user is searching for an advice of dating and dining with a lover, such that recommendations such as "best dating site in lovers' eyes" and "best dating restaurant in lovers' eyes" may be recommended to the user, thus satisfying the user's personal requirement and recommending the recommendations according with the user's requirement to the user.

With the search recommendation method according to embodiments of the present disclosure, a corresponding focus (such as a focus on different scenes and a focus on different types of search results) may be obtained by analyzing search results, and corresponding recommendations may be generated according to the focus and be recommended to the user so as to accord with following operations for searching that the user may take later, such that the user may obtain results by clicking the recommendations directly without inputting a search query again. In this way, the search cost of the user is reduced when multi-azimuth information is provided to the user, such that the user may obtain the search results more rapidly, thus improving the user experience.

In some embodiments of the present disclosure, the recommendations corresponding respectively to the at least one focus may be sequenced according to the query frequency and/or the user search record, such that hot recommendations are at the head. Specifically, the step of sequencing the recommendations may refer to sequencing strategies in related techniques, which is not described herein.

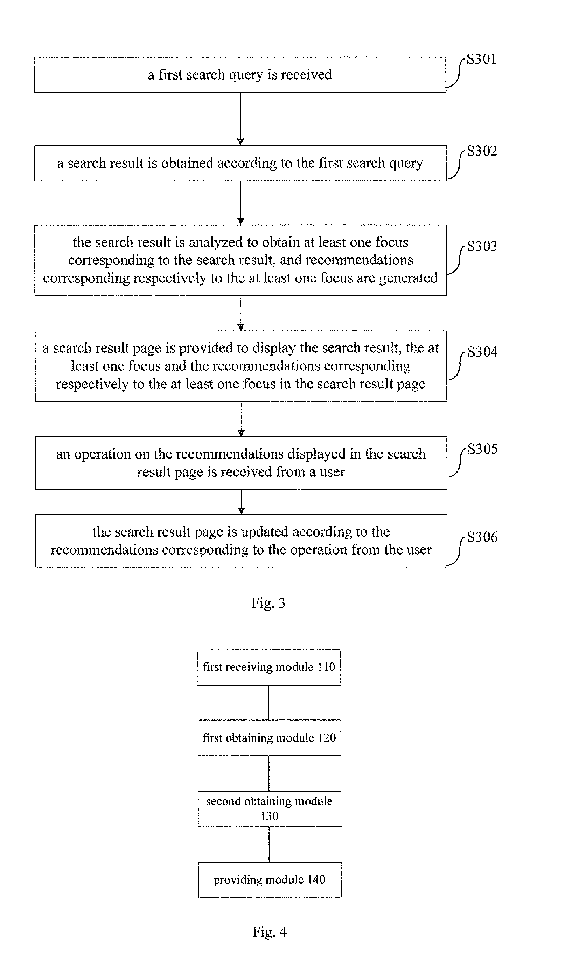

Fig. 3 is a flow chart of a search recommendation method according to another embodiment of the present disclosure.

As shown in Fig. 3, the search recommendation method according to the embodiment of the present disclosure comprises the following steps.

In step S301, a first search query is received.

Specifically, in some embodiments, the search query may be input by a user through an input box provided by a search engine, or through various input boxes for quick searching, which is not limited in the embodiments of the method.

In step S302, a search result is obtained according to the first search query.

Specifically, the method for determining a search result according to a search query may refer to related techniques. The specific method for determining a search result according to a search query is not limited in the embodiments of the present disclosure.

In step S303, the search result is analyzed to obtain at least one focus corresponding to the search result, and recommendations corresponding respectively to the at least one focus are generated.

In one embodiment of the present disclosure, the focus corresponding to the search result is a content that the user wants to know in the search result, i.e. a potential following operation for searching (such as a requirement depending on different scenes, a potential requirement, hypogynous in-depth knowledge or detailed knowledge) which may be obtained according to a query frequency and/or a user search record. The recommendations are entities, services and resources corresponding to the focus.

For example, with respect to a search query "weather of Beijing", a weather forecast of Beijing may be obtained. If it's hazy today, entities and suggestions such as "3M mask", "air cleaner", "notes" or "What is good to eat" may be recommended to the user according to the focus of the user in a hazy weather, such that recommendations may be recommended to the user according to various scenes, thus satisfying the user's potential intention of searching.

In step S304, a search result page is provided to display the search result, the at least one focus and the recommendations corresponding respectively to the at least one focus in the search result page.

In some embodiments of the present disclosure, the at least one focus and the recommendations corresponding respectively to the at least one focus may be displayed below the search result. In other embodiments of the present disclosure, the at least one focus and the recommendations corresponding respectively to the at least one focus may be displayed at other positions, which is not limited in the embodiments of the present disclosure.

Figs. 2(a) to 2(h) are schematic diagrams of search result pages according to embodiments of the present disclosure.

For example, as shown in Fig. 2a, with respect to a search query "The Legend of Zhenhuan", apart from contents provided to the user such as "an original novel of The Legend of Zhenhuan", "a list of actors in The Legend of Zhenhuan", "a theme song of The Legend of Zhenhuan", and "a synopsis of each episode of The Legend of Zhenhuan", the user may search TV shows whose types are as same as that of The Legend of Zhenhuan (whose contents are similar to that of The Legend of Zhenhuan or which are as hot as The Legend of Zhenhuan), so recommendations such as "imperial-harems competing plays which are similar to The Legend of Zhenhuan" and "hot shows" may be recommended to the user.

Since the focus of the user in a hazy weather is different from that in a good weather, some contents and resources everyone is concerned with in the hazy weather may be recommended to the user in the hazy weather; moreover, recommendations such as "Getting around", "spots for enjoying flowers" and "spots with a lake" may be recommended to the user according to the case that the weather may turn better on weekend; on the contrary, recommendations such as "surrounding places for having fun" and "self-driving tours" may be recommended to the user since most of users are concerned with playing in a good weather, as shown in Figs 2b and 2c.

As shown in Fig. 2d, with respect to a search query "methods for training a husky to feign death", related training methods for feigning death may be displayed in the search result page directly. After obtaining the training methods for feigning death, the user may have potential succeeding requirements or related demands. If the user learns that it is difficult to train the husky to feign death after viewing the methods, the user may hope to find a professional pet training institution to help himself/herself to train the husky, or even may hope to find some famous dog trainers to train the husky, such that recommendations such as "training institutions" and "trainers" may be recommended to the user.

In one embodiment of the present disclosure, with respect to a plurality of search results, the step of analyzing the search result to obtain at least one focus corresponding to the search result includes the following steps. Firstly, the plurality of search results are filtered to obtain a filtered search result that is authoritative and may stimulate the user's potential operations for searching most likely. Then, the filtered search result is analyzed to obtain the at least one focus. Specifically, it is determined which search result may stimulate the user's potential operations for searching and is authoritative according to the search record of the user and the authority of the search results, or according to other standards, which is not limited in the embodiments of the present disclosure. For example, as shown in Fig. 2e, with respect to a search query "Fenghuang Hill", a plurality of search results such as an encyclopedia and a tourist guide may be obtained. The encyclopedia may be used as a recommendation basis after the plurality of search results are filtered. Thus, hypogynous in-depth recommendations of Fenghuang Hill such as "scenic spots" and "featuring attractions" may be recommended to the user.

In some embodiments of the present disclosure, with respect to various types of search results (such as encyclopedia type results, question-answer results, and map results), the recommendations according with the user's requirement may be recommended. Specifically, as shown Figs. 2f and 2g, if the search results are map results or include geographic information, Where To services such as "surrounding parking lots", "real-time road conditions", "surrounding environment", and "delicious found nearby" may be recommended to the user. If the search results are question-answer results, the answers to the questions may be used as recommendations directly. Specifically, as shown in Fig. 2g, various folk arts may be used as recommendations directly.

In one embodiment of the present disclosure, personal recommendations may be provided to the user according to a historical search query of the user. Specifically, in the step of analyzing the search result to obtain at least one focus corresponding to the search result, firstly the historical search query is obtained and then the at least one focus is obtained according to the historical search query, the first search query and the search result. For example, as shown in Fig. 2h, if the user searches with a search query "what present is suitable for the girlfriend" before inputting a search query "restaurant having delicious food", it may be determined that the user is searching for an advice of dating and dining with a lover, such that recommendations such as "best dating site in lovers' eyes" and "best dating restaurant in lovers' eyes" may be recommended to the user, thus satisfying the user's personal requirement and recommending the recommendations according with the user's requirement to the user.

In step S305, an operation on the recommendations displayed in the search result page from a user is received.

In some embodiments of the present disclosure, after the recommendations are displayed in the search result page, the user may take an operation on the corresponding recommendations according to the user's requirement, in which the operation may be a clicking operation on the recommendations or other operations, which is not limited in the embodiments of the present disclosure.

In step S306, the search result page is updated according to the recommendations corresponding to the operation from the user.

Specifically, corresponding search results may be obtained according to the recommendations corresponding to the operation from the user, and the search results are further analyzed to obtain corresponding recommendations, and then the search result page is updated according to the search results and the recommendations.

With the search recommendation method according to the embodiment of the present disclosure, a new search result and new recommendations may be displayed in the search result page according to recommendations corresponding to the operation from the user, and recommendations may be provided to the user in real-time for a next operation for searching from the user, thus satisfying the search requirements of the user and reducing the search cost on inputting a search query by the user.

In order to implement the above embodiments of the present disclosure, a search recommendation device is provided.

A search recommendation device includes: a first receiving module, configured for receiving a first search query; a first obtaining module, configured for obtaining a search result according to the first search query; a second obtaining module, configured for analyzing the search result to obtain at least one focus corresponding to the search result, and for generating recommendations corresponding respectively to the at least one focus; a providing module, configured for providing a search result page to display the search result, the at least one focus and the recommendations corresponding respectively to the at least one focus in the search result page.

Fig. 4 is a block diagram of a search recommendation device according to an embodiment of the present disclosure. As shown in Fig. 4, the search recommendation device according to the embodiment of the present disclosure includes: a first receiving module 110, a first obtaining module 120, a second obtaining module 130 and a providing module 140.

Specifically, the first receiving module 110 is configured for receiving a first search query. More specifically, in embodiments of the present disclosure, the search query may be input by a user through an input box provided by a search engine, or through various input boxes for quick searching, which is not limited herein.

The first obtaining module 120 is configured for obtaining a search result according to the first search query. More specifically, the method for determining a search result by the first module 120 according to a search query may refer to related techniques. The specific method for determining a search result according to a search query is not limited in the embodiments of the present disclosure.

The second obtaining module 130 is configured for analyzing the search result to obtain at least one focus corresponding to the search result, and for generating recommendations corresponding respectively to the at least one focus. In one embodiment of the present disclosure, the focus corresponding to the search result is a content that the user wants to know in the search result, i.e. a potential following operation for searching (such as a requirement depending on different scenes, a potential requirement, hypogynous in-depth knowledge or detailed knowledge) which may be obtained according to a query frequency and/or a user search record. The recommendations are entities, services and resources corresponding to the focus.

For example, with respect to a search query "weather of Beijing", a weather forecast of Beijing may be obtained. If it's hazy today, entities and suggestions such as "3M mask", "air cleaner", "notes" or "What is good to eat" may be recommended to the user according to the focus of user in a hazy weather, such that recommendations may be recommended to the user according to various scenes, thus satisfying the user's potential intention of searching.

The providing module 140 is configured for providing a search result page to display the search result, the at least one focus and the recommendations corresponding respectively to the at least one focus in the search result page.

In some embodiments of the present disclosure, the at least one focus and the recommendations corresponding respectively to the at least one focus may be displayed below the search result. In other embodiments of the present disclosure, the at least one focus and the recommendations corresponding respectively to the at least one focus may be displayed at other positions, which is not limited in the embodiments of the present disclosure.

Figs. 2(a) to 2(h) are schematic diagrams of search result pages according to embodiments of the present disclosure.

For example, as shown in Fig. 2a, with respect to a search query "The Legend of Zhenhuan", apart from contents provided to the user such as "an original novel of The Legend of Zhenhuan", "a list of actors in The Legend of Zhenhuan", "a theme song of The Legend of Zhenhuan", and "a synopsis of each episode of The Legend of Zhenhuan", the user may search TV shows whose types are as same as that of The Legend of Zhenhuan (whose contents are similar to that of The Legend of Zhenhuan or which are as hot as The Legend of Zhenhuan), so recommendations such as "imperial-harems competing plays which are similar to The Legend of Zhenhuan" and "hot shows" may be recommended to the user.

Since the focus of the user in a hazy weather is different from that in a good weather, some contents and resources everyone is concerned with in the hazy weather may be recommended to the user in the hazy weather moreover, recommendations such as "Getting around", "spots for enjoying flowers" and "spots with a lake" may be recommended to the user according to a case that the weather may turn better on weekend; on the contrary, recommendations such as "surrounding places for having fun" and "self-driving tours" may be recommended to the user since most of users are concerned with playing in a good weather, as shown in Figs 2b and 2c.

As shown in Fig. 2d, with respect to a search query "methods for training a husky to feign death", training methods for feigning death may be displayed in the search result page directly. After obtaining the training methods for feigning death, the user may have potential succeeding requirements or related demands. If the user learns that it is difficult to train the husky to feign death after viewing the methods, the user may hope to find a professional pet training institution to help himself/herself to train the husky, or even may hope to find some famous dog trainers to train the husky, such that recommendations such as "training institutions" and "trainers" may be recommended to the user.

In some embodiments of the present disclosure, with respect to various types of search results (such as encyclopedia results, question-answer results, map results and so on), the recommendations according with the user's requirement may be recommended. Specifically, as shown Figs. 2f and 2g, if the search results are map results or include geographic information, Where To services such as "surrounding parking lots", "real-time road conditions", "surrounding environment", and "delicious found nearby" may be recommended to the user. If the search results are question-answer results, the answers to the questions may be used as recommendations directly. Specifically, as shown in Fig. 2g, various folk arts may be used as recommendations directly.

In one embodiment of the present disclosure, personal recommendations may be provided to the user according to a historical search query of the user. Specifically, in the step of analyzing the search result to obtain at least one focus corresponding to the search result, firstly the historical search query is obtained and then the at least one focus is obtained according to the historical search query, the first search query and the search result.

With the search recommendation device according to embodiments of the present disclosure, a corresponding focus (such as a focus on different scenes and a focus on different types of search results) may be obtained by analyzing search results, and corresponding recommendations may be generated according to the focus and be recommended to the user so as to accord with following operations for searching that the user may take later, such that the user may obtain results by clicking the recommendations directly without inputting a search query again. In this way, the search cost of the user is reduced when multi-azimuth information is provided to the user, such that the user may obtain the search results more rapidly, thus improving the user experience.

In some embodiments of the present disclosure, the providing module 140 is further configured for sequencing the recommendations corresponding respectively to the at least one focus according to the query frequency and/or the user search record. Specifically, the step of sequencing the recommendations may refer to sequencing strategies in related techniques, which is not described herein.

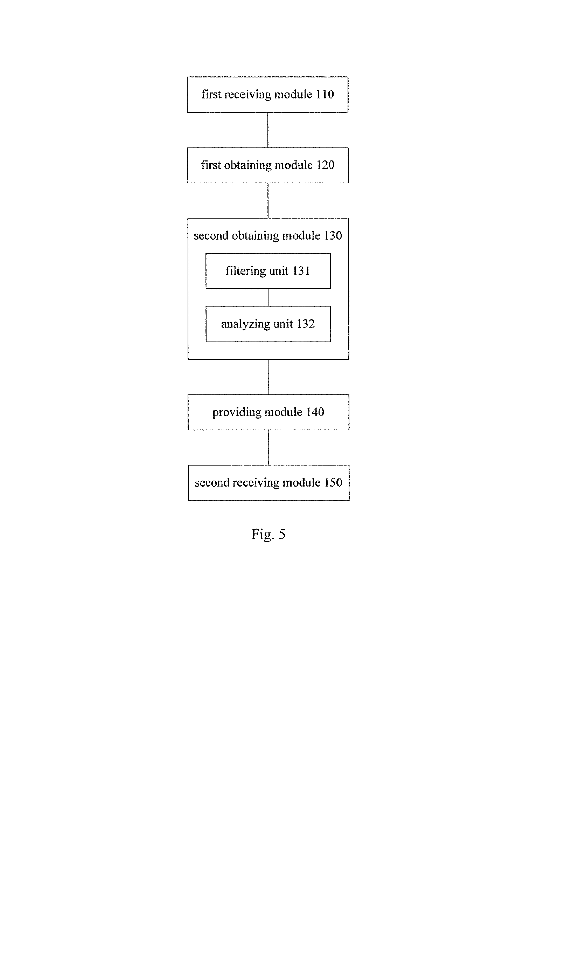

As shown in Fig. 5, in one embodiment of the present disclosure, the second obtaining module 130 includes a filtering unit 131 and an analyzing unit 132.

Specifically, the filtering unit 131 is configured for filtering a plurality of search results to obtain a filtered search result. In one embodiment of the present disclosure, the plurality of search results may be filtered by the filtering unit 131 to obtain the filtered search result that is authoritative and may stimulate the user's potential operations for searching. Specifically, it may be determined which search result may stimulate the user's potential operations for searching and is authoritative according to the search record of the user and the authority of the search results, or according to other standards, which is not limited in the embodiments of the present disclosure.

The analyzing unit 132 is configured for analyzing the filtered search result to obtain the at least one focus.

For example, as shown in Fig. 2e, with respect to a search query "Fenghuang Hill", a plurality of search results such as an encyclopedia and a tourist guide may be obtained. The encyclopedia may be used as a recommendation basis after the plurality of search results are filtered. Thus, hypogynous in-depth recommendations of Fenghuang Hill such as "scenic spots" and "featuring attractions" may be recommended to the user.

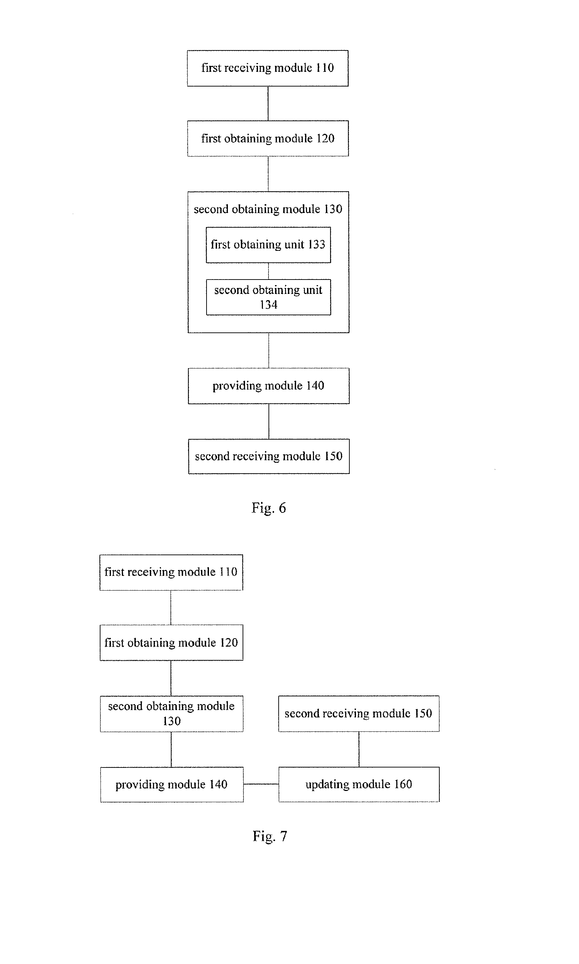

As shown in Fig. 6, in one embodiment of the present disclosure, the second obtaining module 130 includes: a first obtaining unit 133 and a second obtaining unit 134.

Specifically, the first obtaining unit 133 is configured for obtaining a historical search query.

The second obtaining unit 134 is configured for obtaining the at least one focus according to the historical search query, the first search query and the search result.

For example, as shown in Fig. 2h, if the user searches with a search query "what present is suitable for the girlfriend" before inputting a search query "restaurant having delicious food", it may be determined that the user is searching for an advice of dating and dining with a lover, such that recommendations such as "best dating site in lovers' eyes" and "best dating restaurant in lovers' eyes" may be recommended to the user, thus satisfying the user's personal requirement and recommending the recommendations according with the user's requirement to the user.

Thus, with the search recommendation device illustrated in Fig. 6, personal recommendations may be recommended to the user according to the historical search query of the user.

Fig. 7 is a block diagram of a search recommendation device according to another embodiment of the present disclosure. As shown in Fig. 7, the search recommendation device according to the embodiment includes: a first receiving module 110, a first obtaining module 120, a second obtaining module 130, a providing module 140, a second receiving module 150 and an updating module 160.

Specifically, the second receiving module 150 is configured for receiving an operation on the recommendations displayed in the search result page from a user. In some embodiments of the present disclosure, after the recommendations are displayed in the search result page by the providing module 140, the user may take an operation on the corresponding recommendations according to his/her requirement, in which the operation may be a clicking operation on the recommendations or other operations, which is not limited in the embodiments of the present disclosure.

The updating module 160 is configured for updating the search result page according to the recommendations corresponding to the operation from the user. Specifically, the updating module 160 obtains corresponding search results according to the recommendations corresponding to the operation from the user, and further analyzes the search results to generate corresponding recommendations, and then updates the search result page according to the search results and the recommendations.

With the search recommendation device according to the embodiment of the present disclosure, a new search result and new recommendations may be displayed in the search result page according to recommendations corresponding to the operation from the user, and recommendations may be provided to the user in real-time for a next operation for searching from the user, thus satisfying the search requirements of the user and reducing the search cost on inputting a search query by the user.

A non-transitory computer-readable storage medium is provided by embodiments of the present disclosure, including one or more programs for executing a search recommendation provided by embodiments of the present disclosure.

It will be understood that, the flow chart or any process or method described herein in other manners may represent a module, segment, or portion of code that comprises one or more executable instructions to implement the specified logic function(s) or that comprises one or more executable instructions of the steps of the progress. And the scope of a preferred embodiment of the present disclosure includes other implementations in which the order of execution may differ from that which is depicted in the flow chart, which should be understood by those skilled in the art.

The logic and step described in the flow chart or in other manners, for example, a scheduling list of an executable instruction to implement the specified logic function(s), it can be embodied in any computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the printer registrar for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Reference throughout this specification to "one embodiment", "some embodiments," "an embodiment", "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, in a case without contradictions, different embodiments or examples or features of different embodiments or examples may be combined by those skilled in the art.

Although explanatory embodiments have been shown and described, it would be appreciated that the above embodiments are explanatory and cannot be construed to limit the present disclosure, and changes, alternatives, and modifications can be made in the embodiments without departing from scope of the present disclosure by those skilled in the art.

## Claims

1. A search recommendation method, comprising:
receiving a first search query;
obtaining a search result according to the first search query;
analyzing the search result to obtain at least one focus corresponding to the search result, and generating recommendations corresponding respectively to the at least one focus;
providing a search result page to display the search result, the at least one focus and the recommendations corresponding respectively to the at least one focus in the search result page.

2. The method according to claim 1, wherein the at least one focus and the recommendations corresponding respectively to the at least one focus are displayed below the search result.

3. The method according to claim 1 or 2, wherein there are a plurality of search results, and analyzing the search result to obtain at least one focus corresponding to the search result comprises:
filtering the plurality of search results to obtain a filtered search result;
analyzing the filtered search result to obtain the at least one focus.

4. The method according to any of claims 1-3, wherein analyzing the search result to obtain at least one focus corresponding to the search result comprises:
obtaining a historical search query;
obtaining the at least one focus according to the historical search query, the first search query and the search result.

5. The method according to any of claims 1-4, further comprising:
receiving an operation on the recommendations displayed in the search result updating the search result page according to the recommendations corresponding to the operation from the user.

6. The method according to any of claims 1-5, further comprising:
sequencing the recommendations corresponding respectively to the at least one focus according to a query frequency and/or a user search record.

7. A search recommendation device, comprising:
a first receiving module, configured for receiving a first search query;
a first obtaining module, configured for obtaining a search result according to the first search query;
a second obtaining module, configured for analyzing the search result to obtain at least one focus corresponding to the search result, and for generating recommendations corresponding respectively to the at least one focus;
a providing module, configured for providing a search result page to display the search result, the at least one focus and the recommendations corresponding respectively to the at least one focus in the search result page.

8. The device according to claim 7, wherein the providing module is further configured to display the at least one focus and the recommendations corresponding respectively to the at least one focus below the search result.

9. The device according to claim 7 or 8, wherein there are a plurality of search results, and the second obtaining module comprises:
a filtering unit, configured for filtering the plurality of search results to obtain a filtered search result;
an analyzing unit, configured for analyzing the filtered search result to obtain the at least one focus.

10. The device according to any of claims 7-9, wherein the second obtaining module comprises:
a first obtaining unit, configured for obtaining a historical search query;
a second obtaining unit, configured for obtaining the at least one focus according to the historical search query, the first search query and the search result.

11. The device according to any of claims 7-10, further comprising:
a second receiving module, configured for receiving an operation on the recommendations displayed in the search result page from a user;
an updating module, configured for updating the search result page according to the recommendations corresponding to the operation from the user.

12. The device according to any of claims 7-11, wherein the providing module is further configured for sequencing the recommendations corresponding respectively to the at least one focus according to a query frequency and/or a user search record.

13. A non-transitory computer-readable storage medium, comprising one or more programs for executing a search recommendation method according to any one of claims 1-6.
